# EUROPÄISCHE PATENTSCHRIFT

(11) **EP 0 339 341 B1**
(45) Veröffentlichungstag und Bekanntmachung des Hinweises auf die Patenterteilung: **18.11.1993**
(21) Anmeldenummer: 89106237.4
(22) Anmeldetag: 08.04.1989
(51) Int. Cl.: C08G 61/12, H01B 1/12

(54) **Elektrisch leitfähige Polyheteroaromaten und ein Verfahren zu ihrer Herstellung**
Electrically conducting polyheteroaromatics, and process for their preparation
Polyhétéroaromates conducteurs d'électricité et procédé pour leur préparation

(30) Priorität: 21.04.1988 DE 3813362
(43) Veröffentlichungstag der Anmeldung: 02.11.1989
(73) Patentinhaber: BAYER AG, 51368 Leverkusen (DE)
(72) Erfinder: Claussen, Uwe, Dr., D-5090 Leverkusen 3 (DE); Herrmann, Udo, Dr., D-4047 Dormagen 5 (DE)

(56) Entgegenhaltungen:
- EP-A- 0 129 070

## Beschreibung

Die Erfindung betrifft ein neues Verfahren zur Herstellung elektrisch leitfähiger Polyheteroaromaten durch elektrochemische Oxidation von oxidativ polymerisierbaren monomeren heteroaromatischen Verbindungen und die nach diesem Verfahren erhaltenen Polyheteroaromaten.

Es ist bereits bekannt, oxidativ polymerisierbare monomere heteroaromatische Verbindungen wie Pyrrol elektrochemisch zu elektrisch leitfähigen Polyheteroaromaten, z.B. zu Polypyrrol, zu oxidieren (siehe z.B. J. C. S. Chem. Comm. 1979, Seiten 635 und 854 oder DE-OS 30 49 551).

Ferner ist bekannt, daß die Qualität, z.B. die Oberflächenbeschaffenheit, und die physikalischen Eigenschaften, insbesondere die Leitfähigkeit aber auch die mechanische Festigkeit, der durch elektrochemische Oxidation erhaltenen Polymere stark von den bei der Oxidation angewandten Bedingungen abhängen (siehe z.B. J. Electrochem. Soc. 134 (1) 101-105 (1987)). Deshalb wurden bereits die verschiedensten Bedingungen für die elektrochemische Oxidation untersucht und beschrieben.

So wurden für die Oxidation folgende Systeme vorgeschlagen:
a) Leitfähigkeitssalze enthaltende Lösungen der monomeren heteroaromatischen Verbindungen in organischen Lösungsmitteln (siehe z.B. EP-A-0 055 358 und die in dieser zitierten Veröffentlichungen);
b) Leitfähigkeitssalze enthaltende Lösungen der Monomere in wasserhaltigen organischen Lösungsmitteln (siehe z.B. US-PS 3 574 072);
c) Leitfähigkeitssalze und Tenside enthaltende wäßrige Lösungen der Monomere (siehe J. Electrochem. Soc. Loc. Cit.; Macromol. Chem. Rapid Comm. 5, 157-164 (1984); Mol. Cryst. Liqu. Cryst. 1985, Vol. 118, 193-197; Jap. J. Appl. Phys. Part 2, (1985), 24 (6) 423-424 (referiert in CA 103, 88 486s); FR-A-2 556 137);
d) Leitfähigkeitssalze und Tenside und gegebenenfalls mit Wasser mischbare organische Lösungsmittel enthaltende wäßrige Dispersionen der Monomere (siehe EP-A-0 129 070); und
e) Leitfähigkeitssalze, Tenside, organische mit Wasser mischbare Lösungsmittel und aliphatische Kohlenwasserstoffe enthaltende wäßrige Dispersionen (siehe Jap. Pat. Anm. 87/93 863 (referiert in CA 107, 26 112r)).

Mit Hilfe dieser bekannten Systeme sind zwar Polyheteroaromat-Filme, insbesondere Polypyrrol-Filme, erhältlich, die eine gute Qualität und gute physikalische Eigenschaften aufweisen; die Filme sind glatt, biegsam, chemisch stabil und es werden elektrische Leitfähigkeiten von 1 bis über 400 S/cm für sie angegeben. Die Nacharbeitung der Verfahren hat jedoch ergeben, daß elektrische Leitfähigkeiten >30 S/cm nicht reproduzierbar sind (siehe Macromol. Chem. Rapid Commun. Loc. Cit. Seite 158), sondern daß letztlich nur Polyheteroaromat-Filme erhältlich sind, deren Leitfähigkeit ≦ 30 S/cm ist. Außerdem weisen die Filme alle eine für die praktische Anwendung zu geringe Speicherkapazität/kg Film auf.

Überraschenderweise wurde gefunden, daß man bei der elektrochemischen Oxidation monomerer heteroaromatischer Verbindungen in Wasser, Tenside und organische mit Wasser mischbare Lösungsmittel (Cotenside) enthaltenden Systemen dann Polyaromat-Filme mit wesentlich verbesserten Eigenschaften erhält - ihre elektrische Leitfähigkeit ist zuverlässig reproduzierbar und beträgt mindestens 100 S/cm, ihre Speicherkapazität ist um 30 % höher als die bislang erreichten Speicherkapazitäten - wenn man die Mengen an Monomer, Wasser, Tensid und Cotensid so aufeinander abstimmt, daß die Komponenten eine Mikroemulsion bilden.

Mikroemulsionen sind bekanntermaßen spezielle Systeme, die sich in ihren Eigenschaften wesentlich von Lösungen einerseits und den normalen Emulsionen (Makroemulsionen, Dispersionen) andererseits unterscheiden. Mikroemulsionen stellen im Gegensatz zu den normalen Emulsionen optisch klare Flüssigkeiten dar, sind aber trotzdem, im Gegensatz zu den Lösungen, zweiphasige Systeme. Die speziellen Eigenschaften der Mikroemulsionen werden mit dem Vorliegen der emulgierten Teilchen in feinstverteilter Form erklärt (siehe die Angaben zu Mikroemulsionen in der US-PS 4 371 447, Spalte 1).

Erfindungsgemäß wurde gefunden, daß sich die Eigenschaften der bei der elektrochemischen Oxidation heteroaromatischer monomerer Verbindungen erhaltenen Polymerfilme sprunghaft verbessern, wenn die heteroaromatischen Monomere nicht wie bislang in gelöster oder dispergierter Form vorliegen, sondern in mikroemulgierter Form.

Die Erfindung betrifft daher ein Verfahren zur Herstellung von elektrisch leitfähigen Polyheteroaromaten durch elektrochemische Oxidation von Monomeren heteroaromatischen Verbindungen in Wasser, Tenside und/oder Cotenside enthaltenden Elektrolyt-Systemen unter Abscheidung der Polyheteroaromaten auf der Oberfläche der Anode, das dadurch gekennzeichnet ist, daß das Elektrolytsystem eine aus monomerer Verbindung, Wasser, Tensid und Cotensid bestehende Mikroemulsion ist.

Die erfindungsgemäß für die elektrochemische Oxidation zu verwendenden Mikroemulsionen werden dadurch erhalten, daß man die monomere heteroaromatische Verbindung nur mit einer zum Lösen des Monomers nicht ausreichenden Menge Wasser vermischt und die auf diese Weise erhaltene Dispersion mit einer solchen Menge Tensid/Cotensid-Gemisch versetzt, daß gerade eine klare Flüssigkeit entsteht. Diese klare Flüssigkeit, die keine Lösung sondern ein lediglich optisch homogen erscheinendes Zweiphasensystem ist, ist die für die elektrochemische Oxidation zu verwendende Mikroemulsion.

Die Mikroemulsionen sind von den Dispersionen durch die Binodale getrennt. Die Binodale trennt im Zustandsdiagramm Wasser/heteroaromatisches Monomer/Tensid-Cotensidgemisch das Zweiphasengebiet der Wasser/heteroaromatisches Monomer-Dispersionen von dem optisch einphasigen Gebiet der Mikroemulsionen aus heteroaromatischem Monomer/Wasser/Tensid-Cotensidgemischen. Diese Binodale ist für jedes Wasser/Monomer/Tensid-Cotensid-System durch eine Klarpunkttitration bestimmbar, indem man für die verschiedenen Wasser/Monomer-Gemisch (z.B. 1:9-, 2:8-, 3:7-..... 9:1-Gemische) die Menge an Tensid-Cotensid-Gemisch titrimetrisch ermittelt, die erforderlich ist, um die optisch trüben Wasser/Monomer-Dispersionen in die optisch klare Wasser/Monomer/Tensid-Cotensid-Gemisch Mikroemulsionen zu überführen.

Bevorzugt werden Wasser, Monomer und Tensid-Cotensidgemisch in Mengenverhältnissen angewendet, die nahe der Binodalen liegen, d.h. es wird nur ein geringer Überschuß, bis zu 20 Gew.-%, über die Menge an Tensid-Cotensid-Gemisch verwendet, die für das Erreichen des Klarpunktes erforderlich ist.

Der Wassergehalt der erfindungsgemäß zu verwendenden Mikroemulsionen liegt vorzugsweise im Bereich von 40 bis 80 Gew.-%, besonders bevorzugt im Bereich von 40 bis 78 Gew.-%, bezogen auf das Gesamtgewicht der Mikroemulsionen.

Gemäß Stand der Technik wurden bislang die Mengen an Wasser bzw. Wasser/organisches Lösungsmittel-Gemisch und Monomer so gewählt, daß sich das Monomer entweder vollständig im Wasser bzw. Wasser/Lösungsmittelgemisch löst; durch die Zugabe eines Tensids zu diesen Lösungen wird an dem Einphasenzustand der Lösung nichts geändert; oder aber es wurde das Monomere in einer für seine Löslichkeit unzureichenden Menge Wasser bzw. Wasser/Lösungsmittel-Gemisch dispergiert und diese Dispersion aber nur mit einer Tensidmenge versetzt, wie sie zur Stabilisierung der Dispersion, d.h. zur Aufrechterhaltung einer optisch inhomogenen Phase erforderlich ist und nicht - wie erfindungsgemäß - mit einer solchen Tensidmenge, daß eine klare Flüssigkeit, die Mikroemulsion, entsteht.

Mit Hilfe der erfindungsgemäß zu verwendenden Mikroemulsionen werden erstmals Polypyrrol-Filme erhältlich, deren Radikalkationen nur aus zwei Pyrrol-Einheiten aufgebaut sind [2 Pyrrol]^{.⊕}. Polypyrrol-Filme, deren Radikalkationen nur zwei Pyrrol-Einheiten enthalten, sind neu. Die Erfindung betrifft daher auch Polypyrrol-Filme, die aus Radikalkationen der Formel [2 Pyrrol]^{.⊕} und Anionen A^{⊖} aufgebaut sind.

Die Ausführung der elektrochemischen Oxidation mit Mikroemulsionen der monomeren heteroaromatischen Verbindungen hat aber nicht nur den Vorteil, daß sie einen qualitativ wesentlich verbesserten Polymerfilm liefert, sondern auch den Vorteil, daß sie ein Arbeiten mit wesentlich höheren Monomerkonzentrationen erlaubt. Während in den Beispielen der EP-A-0 129 070 nur mit Dispersionen gearbeitet wird, die 2 Gew.-% Monomer (Pyrrol) je 100 g Wasser bzw. 105 g Elektrolytlösung enthalten, können die erfindungsgemäß zu verwendenden Mikroemulsionen ohne weiteres 25 g Monomer (z.B. Pyrrol) in 100 g Wasser bzw. 150 g wäßriger Tensid-Lösung enthalten.

In dem erfindungsgemäßen Verfahren können als oxidativ polymerisierbare monomere heteroaromatische Verbindungen vor allem heteroaromatische Verbindungen mit 5- oder 6-gliedrigen Ringsystemen verwendet werden. Diese monomeren heteroaromatischen Verbindungen enthalten vorzugsweise 1 bis 3 Heteroatome, insbesondere N-, O- und/oder S-Atome, im Ringsystem und können an den Ring-Kohlenstoffatomen, beispielsweise durch Alkylgruppen, insbesondere mit 1 bis 6 C-Atomen, substituiert sein, wobei vorzugsweise mindestens zwei Ring-Kohlenstoffatome nicht substituiert sind, um die anodische Oxidation einfach und gut durchführen zu können. Beispiele für solche heteroaromatischen Verbindungen sind: Furan, Thiophen, Thiazol, Oxazol, Thiadiazol, Imidazol, Pyridin, 3,5-Dimethylpyridin, Pyrazin und 3,5-Dimethylpyrazin. Bevorzugt werden in dem erfindungsgemäßen Verfahren Pyrrole eingesetzt, insbesondere das unsubstituierte Pyrrol aber auch durch Alkylgruppen und Halogenatome substituierte Pyrrole wie 3,4-Dialkylpyrrole, z.B. 3,4-Dimethylpyrrol und 3,4-Diethylpyrrol sowie die 3,4-Dihalogenpyrrole, insbesondere 3,4-Dichlorpyrrol.

Zur Herstellung der erfindungsgemäß zu verwendenden Mikroemulsionen werden vorzugsweise anionische Tenside wie die Alkalisalze, z.B. die Lithiuim-, Natrium- oder Kaliumsalze von Alkylsulfonaten (insbesondere von C₈-C₁₈-Alkylsulfonaten), Alkylarylsulfonaten (insbesondere mit 10 bis 30 C-Atomen), Alkylsulfaten (insbesondere von C₈-C₁₄-Alkylsulfaten) eingesetzt. Durch die Verwendung dieser anionaktiven Tenside erübrigt sich der Zusatz von Leitsalzen zu den Mikroemulsionen.

Cotenside sind Verbindungen, die selbst keine oberflächenaktive Wirkung zu haben brauchen, aber in Gegenwart von Tensiden lösungsvermittelnd wirken. Bevorzugt werden in dem erfindungsgemäßen Verfahren als Cotenside mit Wasser mischbare organische Verbindungen, besonders Ether, Polyether, Alkohole, besonders mehrwertige Alkohole wie Glykole, Polyethylenoxidderivate eingesetzt. Die Menge des Cotensids hängt von den Eigenschaften der monomeren heteroatomatischen Verbindung ab.

Im allgemeinen benötigt man 8 bis 80 Gew.-% Cotensid, vorzugsweise 15 bis 35 Gew.-% bezogen auf das Gewicht des Tensid/Cotensid-Gemisches.

Das erfindungsgemäße Verfahren kann in den üblichen und an sich bekannten elektrolytischen Zellen oder Elektrolyse-Apparaturen durchgeführt werden. Gut geeignet sind beispielsweise einfache Elektrolyse-Apparaturen, bestehend aus einer Zelle ohne Diaphragma, zwei Elektroden und einer externen Stromquelle. Die Elektroden können dabei beispielsweise aus Graphit oder einem üblichen, inerten Elektrodenmaterial sein, insbesondere aus Edelmetall, wie Gold, Platin oder Palladium, Edelstahl, Nickel oder Titan. Da bei der elektrochemischen Polymerisation die monomeren heteroaromatischen Verbindungen anodisch oxidiert werden und sich die gebildeten Polymeren aus der Anode ablagern, sind für die Herstellung von Filmen aus den Poly(heteroaromaten) zumindest die Anode, insbesondere aber beide Elektroden, flächig ausgebildet. Die Größe der Anodenfläche entspricht dabei der Größe des resultierenden Polymerfilmes. Vorzugsweise sind die Flächen der beiden Elektroden parallel zueinander angeordnet.

Außer der erwähnten einfachen elektrolytischen Zelle ohne Diaphragma können auch andere Elektrolyseeinrichtungen für das erfindungsgemäße Verfahren Einsatz finden, beispielsweise Zellen mit Diaphragmen oder solche mit Referenzelektroden zur exakten Potentialbestimmung. Häufig ist eine Messung der Strommenge (A sec) zweckmäßig, da hierüber unter anderem die Schichtstärke der abgeschiedenen Filme kontrolliert werden kann.

Normalerweise wird das erfindungsgemäße Verfahren bei Raumtemperatur durchgeführt. Da sich die Reaktionstemperatur für die Polymerisation der heteroaromatischen Verbindungen als unkritisch erwiesen hat, kann die Temperatur jedoch in einem breiten Bereich variiert werden, solange die Erstarrungstemperatur bzw. Siedetemperatur des Elektrolyt-Lösungsmittels nicht unter- bzw. überschritten wird. Im allgemeinen hat sich eine Polymerisationstemperatur im Bereich von 0 bis 50°C, insbesondere von +10 bis +30°C, als sehr vorteilhaft erwiesen.

Als Stromquelle für den Betrieb der elektrolytischen Zelle, in der das erfindungsgemäße Verfahren durchgeführt wird, eignet sich jede Gleichstromquelle, wie z.B. eine Batterie, die eine hinreichend hohe elektrische Spannung liefert. Üblicherweise wird die erfindungsgemäße elektrochemische Polymerisation mit einer Spannung im Bereich von 1 bis 10 Volt, vorzugsweise im Bereich von 1,5 bis 4 Volt, betrieben. Die Höhe der gewählten Spannung hängt dabei unter anderem auch von dem Elektrodenabstand ab und ist umso höher, je größer dieser ist. Für die Stromdichte haben sich bei dem erfindungsgemäßen Verfahren Werte im Bereich von 0,05 bis 50 mA/cm², vorzugsweise im Bereich von 0,1 bis 5 mA/cm², als günstig und vorteilhaft erwiesen.

Die Dauer der Elektrolyse hängt unter anderem von dem verwendeten Elektrolyt-System, den jeweiligen Elektrolyse-Bedingungen sowie insbesondere auch von der gewünschten Filmdicke ab. Üblicherweise liegt die Elektrolysedauer im Bereich von einigen Minuten oder mehreren Stunden. So lassen sich beispielsweise ohne weiteres innerhalb einer viertel Stunde Filme von einigen µm Dicke, beispielsweise von 5 bis 10 µm Dicke erhalten, so daß sich beispielsweise in einem Zeitraum von 2 bis 12 Stunden Filme einer Dicke im Bereich von 10 bis 100 µm herstellen lassen.

Die während der Elektrolyse anodisch abgeschiedenen filmförmigen Poly(heteroaromaten) werden zur Entfernung von anhaftendem Leitsalz und/oder Emulgator mit Lösungsmitteln, vorzugsweise Wasser oder wäßrigen Lösungsmitteln, gewaschen und bei Temperaturen im Bereich von 25 bis 150°C, vorzugsweise unter Vakuum, getrocknet. Bei Einsatz von Graphit-, Edelmetall-, Stahl-, Titan-, Nickel- oder ähnlichen -Elektroden lassen sich danach die Filme der Poly(heteroaromaten) im allgemeinen leicht von der Elektrode ablösen, vor allem wenn Schichtstärken über 5 µm abgeschieden wurden. Die so erhaltenen Filme sind selbsttragend, stabil, haben gute mechanische Eigenschaften und Festigkeiten und eine gut ausgebildete, zusammenhängende Oberfläche.

Die erfindungsgemäß erhältlichen Polyheteroaromat-Filme unterscheiden sich von den nach dem Stand der Technik erhaltenen Polymerfilmen dadurch, daß in ihnen das Verhältnis Monomereinheiten/Anionen nicht mehr 3:1 sondern 2:1 beträgt und daß sie kein organisches Lösungsmittel eingeschlossen enthalten. Infolge des kleineren Monomereinheiten/Anionen-Verhältnisses weisen die erfindungsgemäß erhältlichen Polymer-Filme eine wesentlich höhere Ladungsdichte als die gemäß Stand der Technik erhältlichen Polymerfilme auf.

Die erfindungsgemäß hergestellten Poly(heteroaromaten) haben sehr gute anwendungstechnische Eigenschaften und können in allen Bereichen eingesetzt werden, in denen auch die bisherigen Poly(heteroaromaten) Anwendung finden. Hierzu gehört beispielsweise der Einsatz zur Herstellung von Katalysatoren, elektrischen Schaltern, Halbleiter-Bauteilen, Elektroden, Abschirmmaterialien sowie zur antistatischen Ausrüstung von Kunststoffen.

### Beispiel 1

12,3 g Pyrrol wurden mit 50 g Wasser vermischt. Die Dispersion wurde mit 34,7 g eines 1:1,6-Gemisches aus Na-Dodecylsulfat und Ethylenglykol versetzt. Nach Zugabe des Gemisches hatte sich die trübe Dispersion in eine klare Flüssigkeit umgewandelt. Die klare Flüssigkeit (Mikroemulsion) wurde in einer Elektrolysezelle elektrolysiert. Die Anode bestand aus mit Gold bedampfter Polycarbonatfolie (effektive Größe: 20 x 40 mm). Nach einer Elektrolysedauer von 0,1 h (Anodenstromdichte: 30 mA/cm² Zellspannung: 3,5 V) hatte sich auf der Anode ein 5 µm dicker schwarzer, glatter Film von Polypyrrol abgeschieden. Seine elektrische Leitfähigkeit betrug 140 S/cm.

Gemäß Elementaranalyse (Verbrennungsanalyse) der PP-Folie entfallen in dieser auf zwei Pyrrol-Einheiten 1 Dodecylsulfation, d.h. sie ist aus [2 Py]^{.⊕} (C₁₂H₂₅OSO₃)^{⊖} aufgebaut.

Gleichwertige Polypyrrol-Filme wurden mit aus folgenden Komponenten aufgebauten Mikroemulsionen erhalten:
a) 12,3 g Pyrrol, 100 g Wasser, 34,7 g eines 1:1.6-Ge misches aus Na-Dodecylsulfat und Ethylenglykol;
b) 12,3 g Pyrrol, 150 g Wasser, 34,7 g eines 1:1.6-Gemisches aus Na-Dodecylsulfat und Ethylenglykol;
c) 16,3 g Pyrrol, 50 g Wasser, 34,7 g eines 1:1.6-Gemisches aus Na-Dodecylsulfat und Ethylenglykol;
d) 12,3 g Pyrrol, 100 g Wasser, 32 g eines 1:2,04-Gemisches aus Na-Octylsulfat und Ethylenglykol;
e) 12,3 g Pyrrol, 100 g Wasser, 33,4 g eines 1:1.8-Gemisches aus Na-Decylsulfat und Ethylenglykol;
f) 12,3 g Pyrrol, 50 g Wasser, 34,7 g eines 1:1.6-Gemisches aus Na-Dodecylsulfonat und Ethylenglykol.

## Patentansprüche

1. Verfahren zur Herstellung von elektrisch leitfähigen Polyheteroaromaten durch elektrochemische Oxidation von monameren heteroaromatischen Verbindungen in Wasser, Tenside und/oder organische mit Wasser mischbare Lösungsmittel enthaltenden Elektrolyt-Systemen unter Abscheidung der Polyheteroaromaten auf der Oberfläche der Anode, dadurch gekennzeichnet, daß das Elektrolytsystem eine aus monomerer Verbindung, Wasser, Tensid und organischen mit Wasser mischbaren Lösungsmittel bestehende Mikroemulsion ist.

2. Verfahren gemäß Anspruch 1, dadurch gekennzeichnet, daß die Mikroemulsion aus monomerer Verbindung, Wasser, einem anionischen Tensid und einem organischen mit Wasser mischbaren Lösungsmittel besteht.

3. Verfahren gemäß Ansprüchen 1 oder 2, dadurch gekennzeichnet, daß der Wassergehalt der Mikroemulsionen im Bereich von 40 bis 80 Gew.-%, bezogen auf das Gesamtgewicht der Mikroemulsion liegt.

4. Verfahren gemäß Anspruch 1, 2 oder 3, dadurch gekennzeichnet, daß der Anteil des organischen mit Wasser mischbaren Lösungsmittels am Tensid/organ. Lösungsmittel-Gemisch 8 bis 80 Gew.-% bezogen auf das Gewicht des Tensid/organ. Lösungsmittels-Gemisches beträgt.

5. Verfahren gemäß einem der Ansprüche 1, 2, 3 oder 4, dadurch gekennzeichnet, daß die monomere Verbindung Pyrrol ist.

## Claims

1. A process for the production of electrically conductive polyheteroaromatic compounds by electrochemical oxidation of monomeric heteroaromatic compounds in electrolyte systems containing water, surfactants and/or organic water-miscible solvents with precipitation of the polyheteroaromatic compounds on the surface of the anode, characterized in that the electrolyte system is a microemulsion consisting of monomeric compound, water, surfactant and organic water-miscible solvent.

2. A process as claimed in claim 1, characterized in that the microemulsion consists of monomeric compound, water, an anionic surfactant and an organic water-miscible solvent.

3. A process as claimed in claim 1 or 2, characterized in that the water content of the microemulsions is in the range from 40 to 80% by weight, based on the total weight of the microemulsion.

4. A process as claimed in claim 1, 2 or 3, characterized in that the percentage content of the organic water-miscible solvent in the surfactant/organic solvent mixture is 8 to 80% by weight, based on the weight of the surfactant/organic solvent mixture.

5. A process as claimed in any of claims 1, 2, 3 or 4, characterized in that the monomeric compound is pyrrole.

## Revendications

1. Procédé de préparation de substances polyhétéroaromatiques conductrices de l'électricité par oxydation électrochimique de composés hétéroaromatiques monomériques dans des systèmes formant électrolytes contenant de l'eau, des tensioactifs et/ou des solvants organiques miscibles à l'eau, avec dépôt des substances polyhétéroaromatiques sur la surface de l'anode, caractérisé en ce que le système formant électrolyte est une microémulsion consistant en un composé monomérique, en de l'eau, en un tensioactif et en un solvant organique miscible à l'eau.

2. Procédé selon la revendication 1, caractérisé en ce que la microémulsion consiste en un composé monomérique, en de l'eau, en un tensioactif anionique et en un solvant organique miscible à l'eau.

3. Procédé selon la revendication 1 ou 2, caractérisé en ce que la teneur en eau des microémulsions est située dans le domaine de 40 à 80 % en poids par rapport au poids total de la microémulsion.

4. Procédé selon la revendication 1, 2 ou 3, caractérisé en ce que la proportion de solvant organique miscible à l'eau dans le mélange tensioactif/solvant organique est de 8 à 80 % en poids par rapport au poids du mélange tensioactif/solvant organique.

5. Procédé selon l'une des revendications 1, 2, 3 ou 4, caractérisé en ce que le composé monomérique est le pyrrole.
